# EUROPEAN PATENT APPLICATION

(11) **EP 2 280 166 A1**
(43) Date of publication of application: **02.02.2011**
(21) Application number: 09725503.8
(22) Date of filing: 06.03.2009
(51) Int. Cl.: F03D 7/02, H02P 9/42, H02P 3/22, H02K 17/42, H02J 3/38

(54) **WIND TURBINE OPERATION METHOD AND SYSTEM**

(30) Priority: 28.03.2008 ES 200800870; 03.11.2008 ES 200803132
(71) Applicant: Ingeteam Energy, S.A., 31621 Sarriguren, Navarra (ES)
(72) Inventor: MAYOR LUSARRETA, Jesús, E-31621 Sarriguren (Navarra) (ES); ACEDO SÁNCHEZ, Jorge, E-31621 Sarriguren (Navarra) (ES); CARCAR MAYOR, Ainhoa, E-31621 Sarriguren (Navarra) (ES); SOLÉ LÓPEZ, David, E-31621 Sarriguren (Navarra) (ES); PÉREZ BARBACHANO, Javier, E-31621 Sarriguren (Navarra) (ES); SIMÓN SEGURA, Susana, E-31621 Sarriguren (Navarra) (ES); GARMENDIA OLARREAGA, Iker, E-31621 Sarriguren (Navarra) (ES); ELORRIAGA LLANOS, Josu, E-31621 Sarriguren (Navarra) (ES); CALVO MADARIAGA, Xabier, E-31621 Sarriguren (Navarra) (ES); OLEA OREGI, Eneko, E-31621 Sarriguren (Navarra) (ES); AURTENETXEA LARRINAGA, Sergio, E-31621 Sarriguren (Navarra) (ES)
(74) Representative: Ungria Lopez, Javier
(86) International application number: PCT/ES2009/000120
(87) International publication number: WO 2009/118433

(57) **Abstract**

The invention relates to wind turbines provided with doubly fed induction generators and with at least one power converter which is novel in that, under certain circumstances, it enables the turbine to operate as a full converter (FC)system, as a doubly fed (DFIG) system or as an asynchronous (AS) system, thereby increasing turbine availability.

## Description

### OBJECT OF THE INVENTION

The present invention relates to wind turbines provided with asynchronous doubly fed generators and with at least one power converter, being novel in that, under certain circumstances, it enables the turbine to operate as a Full Converter (FC) system, a Doubly Fed (DFIG) system or as an Asynchronous (AS) system, thereby increasing turbine availability.

### BACKGROUND OF THE INVENTION

In the early days of wind power generation, most wind turbines were fitted with squirrel-cage asynchronous generators. These turbines operated at a practically constant rotation speed, resulting in a lower efficiency in the conversion of wind power and greater mechanical loads on the wind generator. In the 1990's variable speed wind turbines appeared, fitted with wound-rotor asynchronous generators, their rotor being powered through a power converter; this type of system (referring by system to the generator, power converter and manoeuvring elements assembly) is known as a Doubly-Fed Induction Generator (DFIG) as it requires a power converter to manage the power of the rotor windings. This system has the advantage of a higher energy efficiency and lower mechanical loads, and thus has become one of the dominating systems.

With the same purpose, variable speed wind turbines appeared with generators isolated from the grid by a power converter connected to the stator of the generator, thereby allowing to deliver the power generated by the turbine to the grid. This type of system is known as a Full Converter (FC) system, as they require a power converter to manage the power of the stator windings.

As the installed wind power capacity and the unit power of wind turbines increase, it becomes increasingly important to ensure the availability and reliability of this type of electric power generation.

The present invention applies to wind turbines provided with asynchronous doubly fed generators and with at least one power converter, being novel in that under certain circumstances it enables the turbine to operate as a FC system, DFIG system or Asynchronous (AS) system, thereby increasing turbine availability.

In addition, the inherently distributed nature of wind power means that it is not always possible to guarantee reaction and anomaly repair times as short as would be desirable. This is particularly important in offshore wind turbines, where accessibility can be reduced for various reasons.

The present invention solves the problem discussed above by providing tolerance in case of anomalies in the power converter and other system components, thus allowing to select among the FC, DFIG or AS operation modes.

The state of the art includes inventions meant to prevent loss of availability in wind turbines due to operation failures in system components, or to protect them in case of critical operation conditions in which the integrity of the components is endangered (for example, the power converter).

Patent application US20060214428A1 describes a method for connecting power converters in parallel such that in case of failure of one power converter the remaining ones can continue to operate, thereby preventing the stoppage of the wind turbine, operating always in DFIG mode.

Patent application EP1768223A2 describes a topology for power converters placed in parallel and attacking different windings of the generator, the object of which is to increase the efficiency of conversion and tolerate failure of one of the power converters, operating always in FC mode, so that if one converter fails power continues to be generated, although nominal power will never be reached.

Patent application US20060227578A1 describes a plurality of converters placed in parallel with their output composed of a transformer with several windings connected in series. This proposal, as the prior ones, increases tolerance to failures of the converter by using a plurality of converters.

Patent application US20070024059A1 describes the possibility of activating the semiconductors of the power converter in a short-circuit mode, thereby preventing energy from passing through the converter, avoiding for example an excessive power flow that may damage it. However, it does not allow operating the turbine if the converter is not operative. This situation may occur, for example, in case of failure of the semiconductors of the power electronics or failure of the converter control electronics.

Patent US7012409B2 describes a system whereby an auxiliary power converter makes it possible, in case of grid contingencies, to control the reactive power supplied and used of the grid.US7012409B2 a for ementioned

Patent application WO2008/026973A1 describes an operation method in which the asynchronous generator is connected to the grid either directly or through a power converter, in order to optimize generation at different rotation speeds. US7012409B2 a for ementioned US6628101B2US6628101B2

Currently, wind turbine failures leading to anomalous behaviour of the power converter imply a total or partial loss of power generation until the failure is solved, as the power converter cannot be correctly operated.

The present invention avoids placing redundant power converters and ensures alternative operation modes to continue generating up to 100% of nominal power.

### DESCRIPTION OF THE INVENTION

To accomplish the objectives and solve the aforementioned drawbacks, the invention consists of a new power generation system designed such that it allows changing among the FC, DFIG and AS operation modes, allowing, in a preferred embodiment, to operate at up to 100% of nominal power in one of the various operation modes in which it can function without having any redundant elements.

Nominal power is understood as the maximum characteristic power of each operation mode (FC - DFIG - AS).

In addition, the following operation modes are known:
- FC mode, wherein the generator rotor winding is short-circuited and the stator is connected to the grid through at least one power converter;
- DFIG mode, wherein the generator rotor winding is connected to the grid through at least one power converter and the stator is connected directly to the grid;
- AS mode, wherein the generator rotor winding is short-circuited and the stator is connected directly to the grid.

Partial loss of operability is understood as any failure of at least one system component that prevents generation of 100% of the nominal power in an operation mode. The solution proposed by this invention allows generating up to 100% of nominal power in at least one of the other two operation modes.

In a preferred embodiment of the invention, the entry and exit conditions for each of the operation modes are:
- Partial loss of operability of the system;
- Total loss of operability of the system power converters;
- Specification of the electric grid operator;
- Specification of the general controller of the wind farm;
- Performance optimization criteria;
- Active power reserve required by the wind turbine controller;
- Increased availability during maintenance tasks;
- Or any combination of the above.

In addition, depending on the entry conditions the invention allows selecting the operation mode that maximizes the power generation of the wind turbine.

The method of the invention requires using the following components: at least one wound-rotor asynchronous generator with at least one electrically independent stator, at least one power converter able to control rotor and/or stator currents of said generator in amplitude, frequency and phase, and a set of manoeuvring elements allowing to connect and disconnect the aforementioned components. This method is characterized in that it comprises operation in an operation mode selected among FC, DFIG and AS.

The term "power converter" refers to any topology using power electronics and the associated control. These elements constitute a functional unit in charge of controlling rotor and/or stator magnitudes, such as currents, such that it is possible to deliver power to the electric grid, operating at variable or fixed speed. The power converter can be a topology formed by one or several back-to-back converters (reversible AC-DC-AC conversions through a continuous bus, where AC stands for alternating current and DC for direct current) or any other topology that carries out said functionality.

Each of the power converters can be governed by a controller associated to it. If there are several power converters (with their corresponding controllers) there must be at least one controller able to coordinate the operation of the various converters.

In a preferred embodiment, several power converters can be governed by a single controller.

The design of the wound rotor asynchronous generator has the following characteristics:
- a stator formed by at least one electrically independent system;
- manoeuvring elements able to change the configuration of their rotor, allowing to short-circuit it and isolate it from the power converter, or connect it to the power converter. Short-circuiting of the generator rotor in the DFIG operation mode can be performed by shorting to ground or using other elements such as resistors, inductors, condensers, thyristors, IGBT's, diodes or any combination of these.

The object of this invention is to allow selecting and changing among the three operation modes FC, DFIG and AS to maximize the power generated by the wind turbine, which can be up to 100% of the nominal power in the selected operation mode even in conditions of partial loss of operability.

When the generator type is doubly fed, the method considers disconnecting the rotor of said generator and isolating it from the power converter, short-circuiting the rotor and operating the wind turbine with the generator rotor short-circuited and isolated from the power converter, to allow operating the wind turbine generator in AS mode.

To accomplish this functionality, the procedure of the invention comprises the following stages:
- detecting certain conditions for exiting the current operation mode;
- detecting entry conditions for at least one operation mode other than the current operation mode;
- selecting the operation mode other than the current operation mode;
- operating in the selected operation mode, acting on certain manoeuvring elements.

The operation method for changing from mode FC to DFIG and, once operating in DFIG returning to FC, comprises the following stages:
- detecting at least one exit condition for the FC mode (e.g. partial failure of a system element);
- disconnecting, by actuating manoeuvring elements, the stator of the generator from the converters to which it is connected, and disconnecting the power converters from the grid, disconnecting the rotor short-circuit (established in the FC operation mode) to connect, using the manoeuvring elements, the rotor of the generator to at least one power converter that is not in conditions of partial loss of operability, to operate in the DFIG mode;
- operating the generator in DFIG mode making adaptations to allow coupling it to the grid and generating power (for example, at least, adjusting regulations, set-points, current limits, coupling to grid, or the like);
- connecting the stator to the grid to generate power;
- detecting conditions of entry in FC mode and, when these are fulfilled, acting on the manoeuvring elements to disconnect the system from the grid and activate the FC operation mode.

The operation method for changing from FC mode to AS mode, and when operating in AS mode changing to FC or DFIG mode, comprises the following stages:
- detecting at least one exit condition for the FC mode;
- disconnecting, if it is previously connected and acting on manoeuvring elements, the stator of the generator from the converters to which it is connected and disconnecting the converters from the grid;
- operating the generator in AS mode making adaptations to allow coupling to the grid and generating power (for example, at least, adjusting regulations, set-points, current limits, coupling to grid, or the like);
- connecting the stator to the grid to generate power;
- detecting conditions of entry in DFIG mode and, when these are fulfilled, acting on the manoeuvring elements to disconnect the system from the grid and activate the DFIG operation mode, or detecting conditions of entry in FC mode and, when these are fulfilled, acting on the manoeuvring elements to disconnect the system from the grid and activate the FC operation mode.

The operation method for changing from DFIG mode to AS mode, and when operating in AS mode changing to FC or DFIG mode, comprises the following stages:
- detecting at least one exit condition for the DFIG mode;
- disconnecting, if it is previously connected and acting on manoeuvring elements, the stator of the generator from the grid; using the manoeuvring elements, disconnecting the power converters from the generator rotor and the grid, to operate in AS mode;
- acting on manoeuvring elements to short-circuit the generator rotor;
- operating the generator in AS mode making adaptations to allow coupling to the grid and generating power (for example, at least, adjusting regulations, set-points, current limits, coupling to grid, or the like);
- connecting the stator to the grid to generate power;
- detecting conditions of entry in DFIG mode and, when these are fulfilled, acting on the manoeuvring elements to disconnect the system from the grid and activate the DFIG operation mode, or detecting conditions of entry in FC mode and, when these are fulfilled, acting on the manoeuvring elements to disconnect the system from the grid and activate the FC operation mode.

Therefore, to implement the above method the systems includes, in addition to the elements needed to control the wind turbine:
- manoeuvring elements for connecting/disconnecting the power converter from the generator stator, generator rotor and grid;
- manoeuvring elements for connecting/disconnecting the generator stator to the grid;
- manoeuvring elements for short-circuiting the generator rotor consisting of a plurality of elements selected among active elements, passive elements and a combination thereof. Active elements are understood as those able to manoeuvre automatically (such as contactors, solid state switches) and passive elements are understood as those that cannot be manoeuvred (such as resistors, inductors, capacitors).

In addition to the above elements, a preferred embodiment of the invention includes conventional means for reducing current surges associated to coupling an asynchronous generator (short-circuited rotor) such as soft starters.

The above-described method can be executed using manoeuvring elements both dependent and independent of the converter. Elements dependent of the converter are the power electronics and the manoeuvring elements associated to it. Elements independent of the converter are the power electronics and manoeuvring elements not associated to it.

The method also enables controlling the rotor resistance by short-circuiting the rotor of the generator either directly to ground or using other elements such as resistors, inductors, condensers, thyristors, IGBT's, diodes or any combination thereof.

The converter or components of the converter not in charge of controlling the generator, provided they are operative, can be used to generate reactive power.

Next, to aid a better understanding of this description and as an integral part of it, a series of drawings are provided where for purposes of illustration only and in a non-limiting sense the object of the invention is represented.

### BRIEF DESCRIPTION OF THE DRAWINGS

Figure 1 shows a general diagram of the system according to a preferred embodiment of the invention.
Figure 2 shows a general diagram of the system according to a preferred embodiment of the invention that includes n power converters.
Figure 3 shows a general diagram of the system operating in the FC operation mode.
Figure 4 shows a general diagram of the system operating in the DFIG operation mode.
Figure 5 shows a general diagram of the system operating in the AS operation mode.
Figure 6 shows a general diagram of the system according to a preferred embodiment of the invention wherein part of the power converters are used to control the generator and other converters, not in charge of controlling the generator, are used to control the reactive power delivered directly to the grid.
Figure 7 shows a general diagram of the system according to a preferred embodiment of the invention.

### DESCRIPTION OF THE PREFERRED EMBODIMENT

A description is provided of a preferred embodiment with reference to the figures described above.

The method of the invention comprises operating the system according to an operation mode selected among FC, DFIG and AS.

The change of operation mode is performed when the system is disconnected from the grid and without generating power, using the various manoeuvring elements and by changing the control of the electrical system.

In the change to any of the three operation modes it is necessary to adapt the operation of the various subsystems of the wind turbine, such as pitch control, yaw control, power curve and power converter control among others.

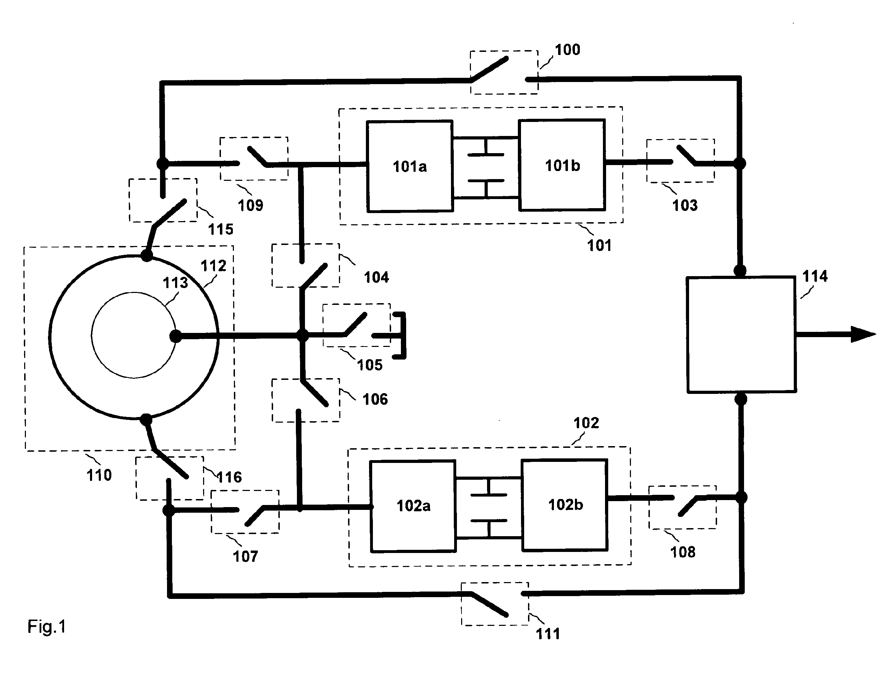

Then a description is made of the different ways to adapt the operation of the system by acting on the different subsystems according on the specific case represented in figure 1, in which the system comprises two power controllers (101) and (102) and one generator (110). The power converters (101) and (102) include the controllers needed for their operation.

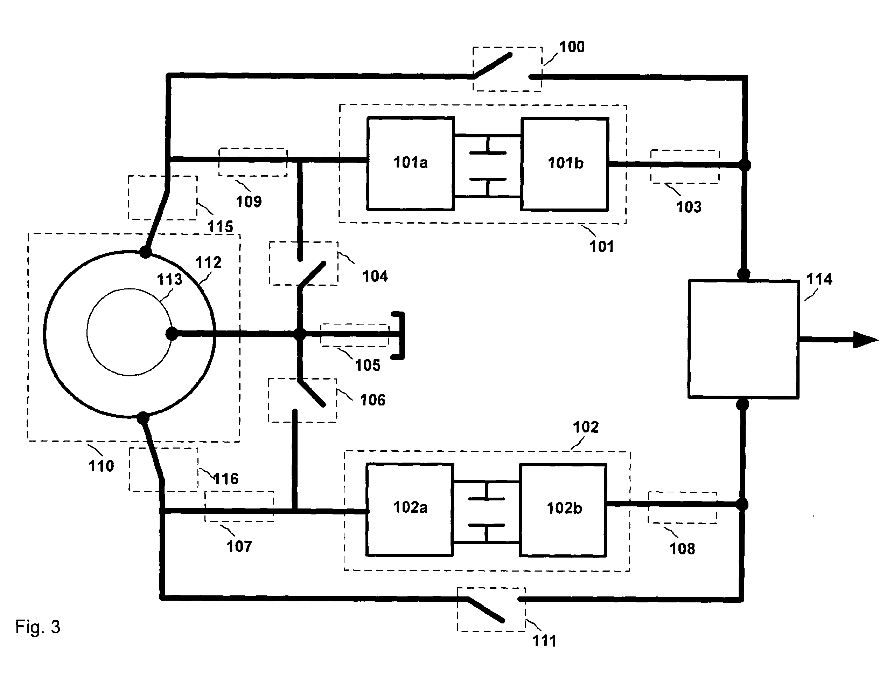

In the FC operation mode (figure 3) the wind turbine is represented acting as an FC system, so that the manoeuvre element (105) must be closed to short-circuit the rotor (113) of the generator; the rotor is electrically isolated by the open manoeuvring elements (104) and (106), and the stator of the generator is connected to the power converters by the closed manoeuvring elements (115) and (116). All the power of the generator is evacuated through the manoeuvring elements (109) and (107) connected to the power converters. The power converters are connected to the grid through the manoeuvring elements (103) and (108) (closed). Connection to the grid can be established directly or through a transformer (114).

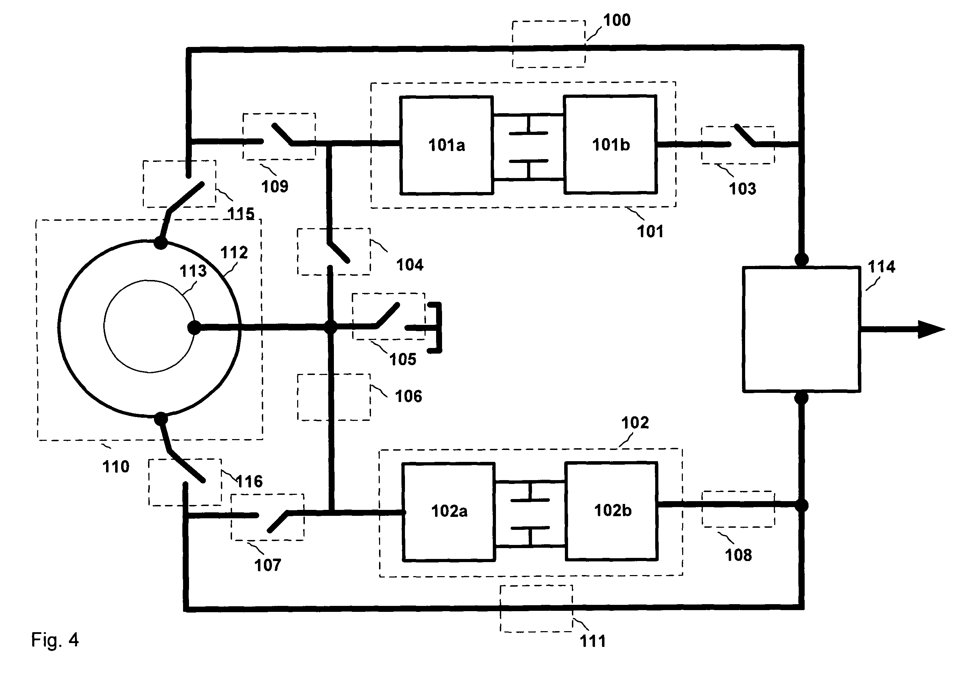

In case of failure of one of the power converters (101, 102) the operation mode is changed to DFIG (Figure 4) for operation in DFIG mode. Despite the system failure, this new operation mode allows working with up to 100% of the nominal power.

In case of failure of the power converter (101) and if it cannot be used to control the generator, the operation mode configuration is changed from FC to DFIG. The process starts by isolating the power converter (101) or part thereof (101a and/or 101b) in which a failure has occurred, opening the manoeuvring elements (109 and/or 103 and 104). The generator stator is isolated from the grid (manoeuvring elements 115 and 116 open). To operate as asynchronous doubly-fed generator, the power converter (102) is connected to the rotor (113) of the generator (110), manoeuvring element (107) open, manoeuvring element (106) closed and manoeuvring element (105) open to undo the short-circuit of the generator rotor, and the generator stator is connected to the grid with the manoeuvring elements (115) and (116) closed. Lastly, to evacuate the stator power generated in the DFIG mode the manoeuvring elements (100, 111, 115 and 116) are closed. If the power converter (101) is disabled for operation in FC mode and one of its components (101a or 101b) is operative, this component can be used to generate reactive power. The manoeuvring element (109) is closed in case of failure of part (101b) (with 101a operative) or the manoeuvring element (103) is closed in cause of failure of part (101a) (with 101b operative).

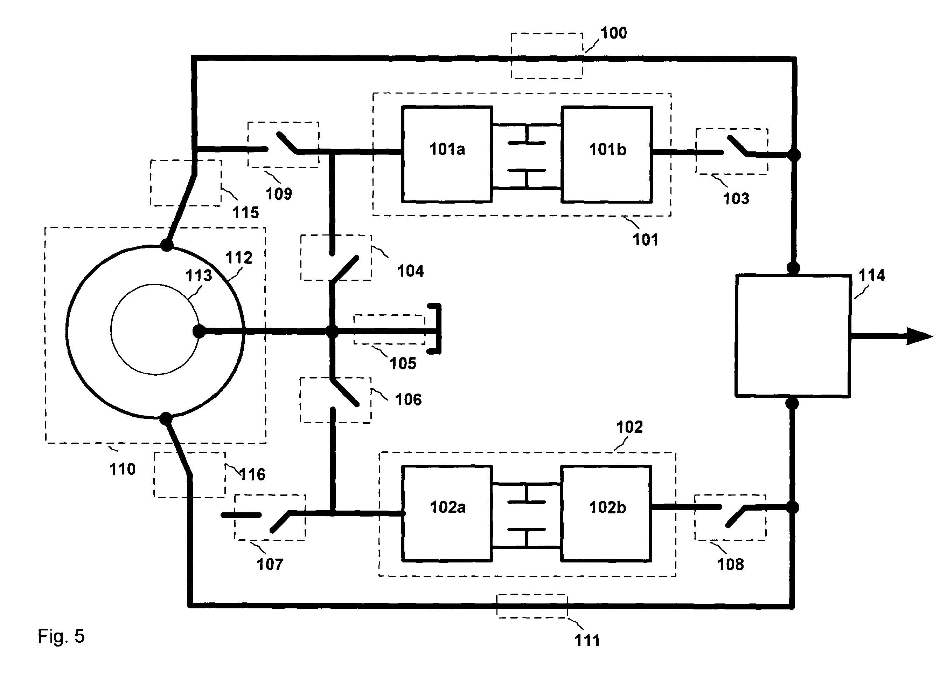

In case of failure of the power converter (101) and the power converter (102), a configuration change is performed from operation mode DFIG to AS (figure 5). The process begins by isolating the two faulty power converters (101a and/or 101b) and (102a and/or 102b), with manoeuvring elements (104 and 106) open and the manoeuvring element needed to isolate the faulty part of the converter (109, 103, 107 and 108). The generator stator is isolated from the grid (manoeuvring elements 115 and 116 open). To operate as asynchronous generator directly connected to the grid, the generator stator is connected to the grid with the manoeuvring elements 115 and 116 closed, the rotor (113) of the generator (110) is short-circuited with the manoeuvring element (105) closed. Lastly, to evacuate the stator power generated, the manoeuvre elements (100 and 111) are closed. In this case, in which all power converters fail, the system can continue operating at up to 100% nominal power of the AS operation mode. If one of the components of the power converters (101a, 101b, 102a, 102b) are operative, they can be used to generate reactive power. A process similar to that of the previous case is followed, opening the manoeuvring elements of the faulty components and closing the manoeuvring elements of the operative components.

In case of partial or total lack of operability of the generator (110) or in no-wind conditions, the generator (110) is disconnected from the grid with the manoeuvring elements 115, 116, 104 and 106. The manoeuvring elements 100, 111, 109, 107, 103 and 108 are closed. In this case, the power converters (101a, 101b, 102a, 102b) can be used to generate reactive power.

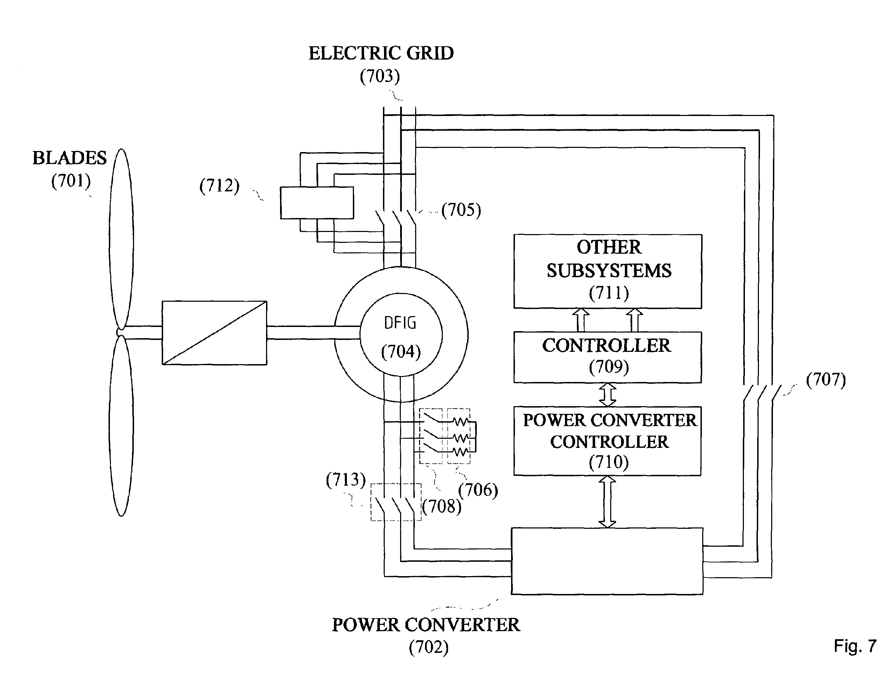

It should be obvious to one skilled in the art that the invention is applicable to a doubly fed wind turbine, as it can be operated in DFIG or AS mode. For this purpose, as shown in figure 7, it is necessary to use a power converter (702) to allow coupling the wind turbine to the electric grid (703) at variable speed. The generator (704) is of the wound rotor induction type with its windings accessible to the power converter (702) by brush rings, allowing the power converter (702) to power the generator rotor (hence its name, doubly-fed induction generator, DFIG).

In the configuration of the current state of the art the manoeuvring elements are a switch (707) that allows disconnecting the power converter (702) from the electric grid (703) and a switch (705) for connecting and disconnecting the stator from the electric grid (703). The manoeuvring elements (705 and 707) can be contactors, switches, thermo-magnetic relays, or the like.

The controller of the wind turbine (709) is in charge of supervising and acting on all subsystems that make up the wind turbine, such as the hydraulic unit, pitch systems, yaw systems, atmospheric condition and electric grid monitoring systems, power converter controller (710), or the like.

In the wind turbine DFIG operation mode the power converter (702) is in charge of injecting in the rotor of the generator (704) current enabling to generate power at a variable speed.

According to the invention a set of manoeuvring elements (708 and 713) are introduced between the generator rotor and the power converter (702). In a preferred embodiment these elements are external to the power converter (702) and operated by the wind turbine controller (709) together with the other subsystems mentioned above. In another embodiment the manoeuvring elements (708 and 713) are controlled by the power converter controller (710) or by a combination of both controllers (709 and 710).

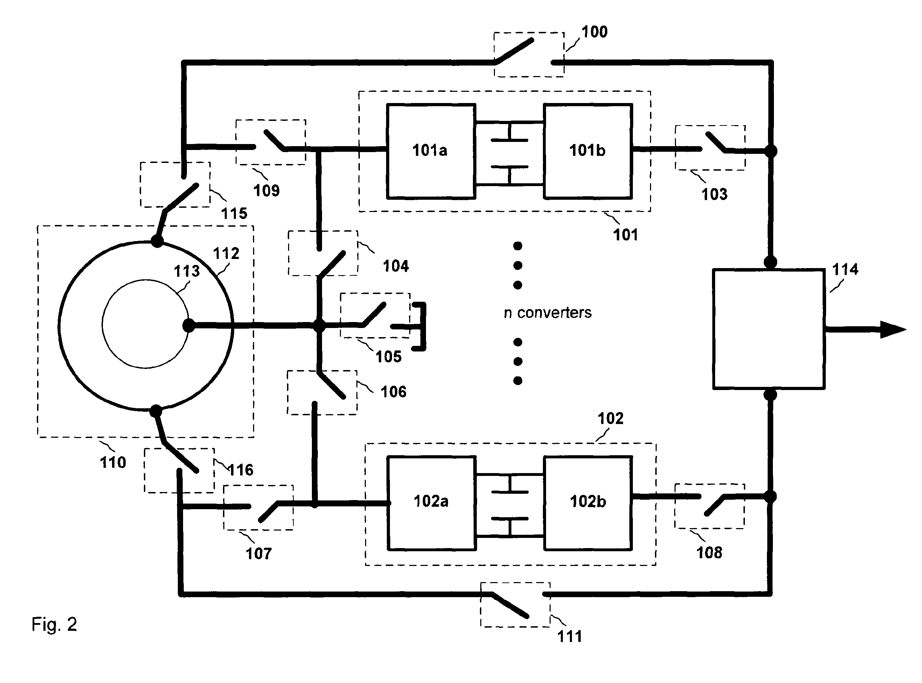

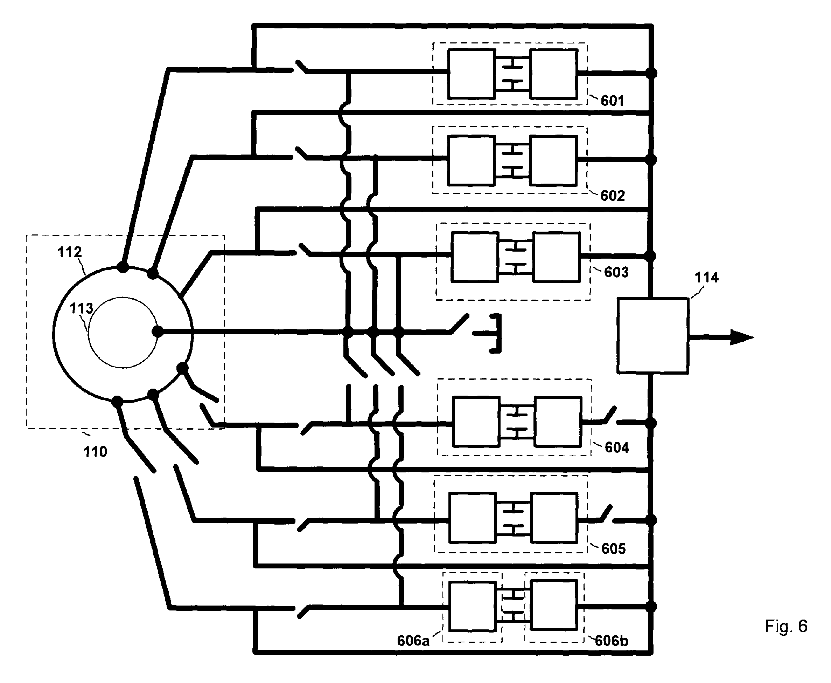

In another preferred embodiment of the invention (Figure 2) a system is used with n power converters which includes the controllers needed for its operation (in figure 6 the case where n=6 converters is shown), enabling to:
1. Select the operation mode;
2. In the same operation mode, given the conditions in which the obtainable power is less than the nominal power, select the elements that must be active and inactive and the load at which they operate;
3. In the same operation mode, select the power converters used to control the generator and select the converters, or the components thereof, used to generate the reactive power injected directly into the grid.

Figure 6 shows the specific case of the system operating in the DFIG operation mode, where:
- the converters (601, 602, 603 and 606b) work correctly;
- the converters (604 and 605) are partially inoperative;
- the converter (606a) operates correctly but is disconnected.

## Claims

1. **WIND TURBINE OPERATION METHOD** that includes at least one wound-rotor asynchronous generator with at least one electrically independent stator; at least one power converter able to control the currents of the generator, selected among the rotor currents, stator currents and combinations thereof in amplitude, frequency and phase; **characterized in that** it comprises operating the system according to an operating mode selected among Full Converter (FC), Doubly fed (DFIG) and Asynchronous (AS) by means of a set of manoeuvring elements.

2. **WIND TURBINE OPERATION METHOD** according to claim 1 wherein the generator type is doubly fed which comprises disconnecting the rotor of the doubly fed asynchronous generator, isolating it from the power converter, short-circuiting the rotor of said generator and operating the wind turbine with the generator rotor short-circuited and isolated from the power converter, to allow operating the wind turbine generator in Asynchronous (AS) mode.

3. **WIND TURBINE OPERATION METHOD** according to claims 1 and 2, **characterized in that** it comprises the following stages:
- detecting exit conditions from the current operation mode;
- detecting entry conditions for at least one operation mode other than the current operation mode;
- selecting the operation mode other than the current operation mode;
- operating in the selected operation mode, acting on manoeuvring elements.

4. **WIND TURBINE OPERATION METHOD** according to claim 1, **characterized in that** the change in operating mode from Full Converter (FC) to Doubly Fed (DFIG) comprises the following stages:
- detecting at least one exit condition from the Full Converter (FC) mode;
- detecting the input conditions for the doubly fed (DFIG) mode;
- disconnecting the generator stator from the power converters to which it is connected, disconnecting the power converters from the grid, disconnecting the rotor short-circuit and connecting the generator rotor to at least one power converter that is not in situation of partial loss of operability, acting on manoeuvring elements, to operate in doubly fed mode (DFIG);
- operating the generator in doubly fed (DFIG) mode making adaptations for the doubly fed (DFIG) mode to couple the generator to the grid and generate power;
- connecting the stator to the grid to generate power;
- detecting the entry conditions for the Full Converter (FC) mode and activating this mode when these conditions are fulfilled.

5. **WIND TURBINE OPERATION METHOD** according to claim 1, **characterized in that** the change in operating mode from Full Converter (FC) to Asynchronous (AS) comprises the following stages:
- detecting at least one exit condition from the Full Converter (FC) mode;
- detecting the input conditions for the Asynchronous (AS) mode;
- disconnecting the generator stator from the power converters to which it is connected and disconnecting the power converters from the grid, acting on manoeuvring elements;
- operating the generator in Asynchronous (AS) mode making adaptations for the Asynchronous (AS) mode to couple the generator to the grid and generate power;
- connecting the stator to the grid to generate power;
- detecting the entry conditions for the mode selected among Doubly Fed (DFIG) and Full Converter (FC) and activating the selected mode when these conditions are fulfilled.

6. **WIND TURBINE OPERATION METHOD** according to claim 2, **characterized in that** the change in operating mode from Doubly Fed (DFIG) to Asynchronous (AS) comprises the following stages:
- detecting at least one exit condition from the Doubly Fed (DFIG) mode;
- detecting the input conditions for the Asynchronous (AS) mode;
- disconnecting the generator stator from the grid, disconnecting the power converters from the generator rotor and the grid, acting on manoeuvring elements to operate in asynchronous (AS) mode;
- short-circuiting the generator rotor, acting on manoeuvring elements;
- operating the generator in asynchronous (AS) mode, making adaptations for the asynchronous (AS) mode to couple the generator to the grid and generate power;
- connecting the stator to the grid to generate power;
- detecting the entry conditions for the mode selected among Doubly Fed (DFIG) and Full Converter (FC) and activating the selected mode when these conditions are fulfilled.

7. **WIND TURBINE OPERATION METHOD** according to claim 1, **characterized in that** it comprises controlling the rotor resistance short-circuiting the generator rotor.

8. **WIND TURBINE OPERATION METHOD** according to claim 2, **characterized in that** it comprises reducing the current surge produced when coupling an asynchronous generator to the grid.

9. **WIND TURBINE OPERATION METHOD** according to claim 1 **characterized in that** it comprises:
- selecting the power converters to control the generator; and
- selecting the power converters or their components that are not in charge of controlling the generator and are intended to generate reactive power that is injected directly in the grid.

10. **WIND TURBINE OPERATION SYSTEM** according to claim 3, **characterized in that** the entry and exit conditions are selected among:
- partial loss of operability of the system;
- total loss of operability of the power converters of the system;
- specification of the power grid operator;
- specification of the general controller of the wind farm;
- performance optimization criteria;
- reserve of active power required by the wind turbine controller;
- increased availability during maintenance work;
- any combination of the above.

11. **WIND TURBINE OPERATION SYSTEM** that includes at least one asynchronous wound-rotor generator with at least one electrically independent stator, at least one power converter able to control the generator currents selected among the rotor currents, stator currents and combinations thereof in amplitude, frequency and phase, **characterized in that** it comprises;
- manoeuvring elements for connecting/disconnecting the power converters from the generator stator, generator rotor and the grid;
- manoeuvring elements for connecting/disconnecting the generator stator from the grid;
- manoeuvring elements for short-circuiting the generator stator, consisting of a plurality of elements selected among active elements, passive elements and combinations thereof.

12. **WIND TURBINE OPERATION SYSTEM** according to claim 11, **characterized in that** the active and passive elements that constitute the manoeuvring elements consist of elements selected among elements dependent of the power converters and elements independent of the power converters.

13. **WIND TURBINE OPERATION SYSTEM** according to claim 11, **characterized in that** the passive elements are selected among resistors, inductances, capacitors and combinations thereof.

14. **WIND TURBINE OPERATION SYSTEM** according to claim 11, **characterized in that** the active elements are selected among diodes, transistors, thyristors, electronically controllable semiconductors and combinations thereof.

15. **WIND TURBINE OPERATION SYSTEM** according to claim 11, **characterized in that** it comprises means for reducing the current surge when coupling an asynchronous generator to the grid.
